(19) Europäisches Patentamt
European Patent Office
Office européen des brevets

(11) **EP 4 383 147 A1**

(12) **EUROPEAN PATENT APPLICATION**

(43) Date of publication:
**12.06.2024 Bulletin 2024/24**

(21) Application number: **22306813.1**

(22) Date of filing: **07.12.2022**

(51) International Patent Classification (IPC):
**G06N 10/70** *(2022.01)*     **G06N 10/20** *(2022.01)*

(52) Cooperative Patent Classification (CPC):
**G06N 10/70; G06N 10/20**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicants:
 • **Commissariat à l'énergie atomique
   et aux énergies alternatives
   75015 Paris (FR)**
 • **Université Grenoble Alpes
   38400 Saint-Martin-d'Hères (FR)**
 • **Institut Polytechnique de Grenoble
   38000 Grenoble (FR)**

 • **Centre National de la Recherche Scientifique
   75794 Paris Cedex 16 (FR)**

(72) Inventors:
 • **SAVIN, Valentin
   38054 Grenoble Cedex 9 (FR)**
 • **GOSWAMI, Ashutosh-Kumar
   38054 Grenoble Cedex 09 (FR)**
 • **MHALLA, Mehdi
   38100 Grenoble (FR)**

(74) Representative: **Brevalex
   56, Boulevard de l'Embouchure
   B.P. 27519
   31075 Toulouse Cedex 2 (FR)**

(54) **QUANTUM CODES WITH TRANSVERSAL LOGICAL T GATE**

(57)    The present invention concerns a quantum processing system (1) configured to implement a transversal action of a logical T gate on a triply even quantum code (Q1) or a triply even quantum polar code (Q2) encoding K logical qubits into N physical qubits wherein the logical T gate is a tensorproduct of K elementary logical gates acting on the corresponding K logical qubits.

FIG. 5

**Description**

**FIELD OF THE INVENTION**

The present invention concerns the field of quantum computation and more particularly of a fault tolerant implementation of a transversal logical T gate used for universal quantum computation. It relates to a system implementing triply even quantum codes and more specifically to triply even quantum polar codes with a transversal logical T gate and a method of constructing the triply even quantum polar codes.

**BACKGROUND OF THE INVENTION**

Quantum computers make use of quantum phenomena such as superposition and entanglement to perform computation. Through precise control of these phenomena, it is in principle possible for quantum computers to outperform their classical counterparts. Quantum computation is based on the manipulation of quantum bits or "qubits" which can be regarded as a superposition of the 1 and 0 states of a quantum physical variable.

A qubit is the basic unit of quantum information, also called quantum state $|\psi\rangle$ which corresponds to a superposition of basis states $|0\rangle$ and $|1\rangle$, as follows:

$$|\psi\rangle = \alpha|0\rangle + \beta\,|1\rangle \qquad (1)$$

where $\alpha$ and $\beta$ are complex numbers satisfying the normalization constraint, $|\alpha|^2 + |\beta|^2 = 1$. The quantum state $|\psi\rangle$ is a vector in a complex linear vector space, known as the Hilbert space. The set $\{|0\rangle, |1\rangle\}$ is an orthogonal basis of the Hilbert state, known as the computational basis. This basis is not unique. For example, another important basis is the phase basis, which corresponds to the set $\{|+\rangle, |-\rangle\}$, where $|+\rangle$ and $|-\rangle$ are orthogonal vectors defined as follows:

$$|+\rangle := \frac{|0\rangle + |1\rangle}{\sqrt{2}}, \qquad |-\rangle := \frac{|0\rangle - |1\rangle}{\sqrt{2}} \qquad (2)$$

A qubit $|\psi\rangle$ can also be written as a superposition of basis states $|+\rangle$ and $|+\rangle$. The quantum state or qubit $|\psi\rangle$ in Eq. (1) can be expressed in the phase basis, as follows:

$$|\psi\rangle = \frac{\alpha + \beta}{\sqrt{2}}\,|+\rangle + \frac{\alpha - \beta}{\sqrt{2}}\,|-\rangle \qquad (3)$$

The basis states can be extended to $N$ qubits, where $N > 1$, by tensor products. For a binary vector $\boldsymbol{u} = (u_1, ..., u_N) \in \{0,1\}^N$, let $|\boldsymbol{u}\rangle = |(u_1, ..., u_N)\rangle := |u_1\rangle \otimes \cdots \otimes |u_N\rangle$. Then, the set $\{\,|\boldsymbol{u}\rangle \mid \boldsymbol{u} \in \{0,1\}^N\,\}$ is the computational basis on $N$ qubits.

Any $N$ qubit quantum state can be written as a superposition of the $N$ qubit computational basis states:

$$|\psi\rangle = \sum_{\boldsymbol{u}\in\{0,1\}^N} \alpha_{\boldsymbol{u}}|\boldsymbol{u}\rangle, \qquad (4)$$

where $\alpha_u$ are complex numbers satisfying the normalization condition $\Sigma_u|\alpha_u|^2 = 1$. Similarly, the quantum state $|\psi\rangle$ can also be written as superposition of $N$ qubit phase basis states, which are tensor products of $|+\rangle$ and $|-\rangle$ states.

A quantum state $|\psi\rangle$ on $N$ qubits is said to be entangled if it is not possible to write $|\psi\rangle$ as a tensor product of $N$ single qubit quantum states, that is:

$$|\psi\rangle \neq |\psi_1\rangle \otimes |\psi_2\rangle \otimes \cdots \otimes |\psi_N\rangle \qquad (5)$$

where $|\psi_1\rangle, |\psi_2\rangle, ..., |\psi_N\rangle$ are single qubit states. Hence, entanglement refers to correlation between parts of a quantum system. It is a peculiar property of quantum systems, as it does not have a classical counterpart.

The processing of quantum information is performed by applying quantum gates on qubits. Some examples of these quantum gates are Pauli, Hadamard, Phase, CNOT, and Controlled-Z gates.

Pauli gates are a set of four quantum gates, denoted by *I, X, Y, Z*, which act on a single qubit. Their action in the computational basis is as follows:

$$I|0\rangle = |0\rangle, \quad I|1\rangle = |1\rangle \qquad (6)$$

$$X|0\rangle = |1\rangle, \quad X|1\rangle = |0\rangle \qquad (7)$$

$$Z|0\rangle = |0\rangle, \quad Z|1\rangle = -|1\rangle \qquad (8)$$

$$Y|0\rangle = i|1\rangle, \quad Y|1\rangle = -i|0\rangle \qquad (9)$$

Note that $Y = i\,ZX$, and $X^2 = Y^2 = Z^2 = I$, where *I* is the identity operator in Eq. (6). From Eq. (7), Pauli *X* acts like a NOT gate in the computational basis. From Eq. (8), it also follows that $Z|+\rangle = |-\rangle$ and $|-\rangle = |+\rangle$, hence Pauli *Z* acts like a NOT gate in the phase basis.

Pauli gates are extended to act on *N* qubits by tensor product. For example, $X \otimes Z$ is a Pauli operator on two qubits.

Let $\bar{\mathcal{G}}_N$ be the set of all Pauli operators on *N* qubits, and $\mathcal{G}_N := \{\pm 1, \pm i\} \times \bar{\mathcal{G}}_N$, the set of Pauli operators possibly with a $\pm 1$ or $\pm i$ sign. Then $\mathcal{G}_N$ is a mathematical group, which is referred to as the *N* qubit Pauli group. It is worth noting here that any two elements $g_1, g_2 \in \mathcal{G}_N$ either commute, that is, $[g_1, g_2] := g_1 g_2 - g_2 g_1 = 0$, or anti-commute, that is, $\{g_1, g_2\} := g_1 g_2 + g_2 g_1 = 0$.

The Hadamard gate, denoted by *H*, acts on a single qubit. It maps a computational basis state to a phase basis state and vice-versa. Its action in the computational basis is as follow:

$$H|0\rangle = |+\rangle, \quad H|1\rangle = |-\rangle \qquad (10)$$

The phase gate $R_\theta$ corresponding to a $\theta \in [0, \pi]$ is a single qubit gate, which act as follows in the amplitude basis,

$$R_\theta|x\rangle = e^{2i\theta x}|x\rangle, x \in \{0, 1\} \qquad (11)$$

The *S* and *T* gates are two important phase gates, which correspond to $\theta = \dfrac{\pi}{4}$ and $\theta = \dfrac{\pi}{8}$, respectively. Note that Pauli *Z* gate is also a phase gate corresponding to $\theta = \dfrac{\pi}{2}$.

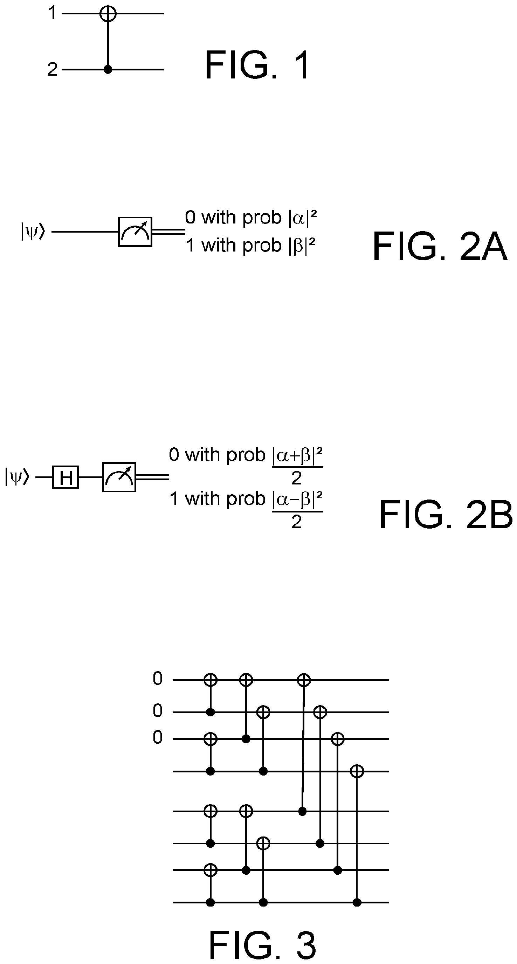

Fig. 1 represents a Controlled-NOT (CNOT) gate the $\text{CNOT}_{2 \to 1}$. The gate takes as input two qubits with control on the second qubit and target on the first qubit. Each horizontal wire carries a single qubit from left to right. The action of the gate takes place at the target qubit while the control qubit is unaffected by this action. The gate $\text{CNOT}_{2 \to 1}$ acts similarly to the classical reversible XOR gate, denoted $\text{XOR}_{2 \to 1}$, in the computational basis, that is:

$$\text{CNOT}_{2 \to 1}(|x\rangle \otimes |y\rangle) = |x \oplus y\rangle \otimes |y\rangle, \quad x, y \in \{0, 1\} \qquad (12)$$

where $x \otimes y$ denotes the XOR (sum modulo 2) of binary values *x* and *y*.

The $\text{CNOT}_{2 \to 1}$ gate and the classical XOR gate are represented by the same circuit except to the fact that the CNOT gate acts on two qubits, while the XOR gate acts on two bits.

It is worth noting that $\text{CNOT}_{2 \to 1}$ acts as the $\text{XOR}_{1 \to 2}$ gate (with reversed control and target) in the phase basis. Precisely, let $|\bar{0}\rangle := |+\rangle$ and $|\bar{1}\rangle := |-\rangle$, then we have the following:

$$\mathrm{CNOT}_{2\to1}\left(|\overline{x}\rangle \otimes |\overline{y}\rangle\right) = |\overline{x}\rangle \otimes |\overline{x \oplus y}\rangle, \quad x, y \in \{0, 1\} \tag{13}$$

The controlled-$Z$ gate, denoted by CZ, takes as input two qubits. Its action in the computational basis is as follows:

$$\mathrm{CZ}\left(|x\rangle \otimes |y\rangle\right) = (-1)^{xy}|x\rangle \otimes |y\rangle, \quad x, y \in \{0, 1\} \tag{14}$$

Figs. 2A and 2B represent quantum measurement circuits on a qubit in computational and phases bases. The single wire on the input carries a single qubit while the double wire on the output carries a single classical bit.

In general, a quantum measurement on a qubit is performed with respect to an orthogonal basis, and the measurement outcome gives classical information. After the measurement, the qubit collapses randomly into one of the basis states, depending on the measurement outcome.

In particular, Fig. 2A represents the measurement of the qubit $|\psi\rangle = \alpha|0\rangle + \beta|1\rangle$ in the computational basis. The measurement output is 0 with probability $|\alpha|^2$ and 1 with probability $|\beta|^2$. If the measurement outcome is 0, then the output state is $|0\rangle$ and if the measurement outcome is 1, then the output state is $|1\rangle$.

The computational basis measurement is also known as the Pauli $Z$ measurement as $|0\rangle$ and $|1\rangle$ are eigenstates of the Pauli gate $Z$.

Fig. 2B represents the measurement of the qubit $|\psi\rangle = \alpha|0\rangle + \beta|1\rangle$ in the phase basis $\{|+\rangle, |-\rangle\}$. The measurement circuit is equivalent to first applying the Hadamard gate on $|\psi\rangle$, and then measuing it in the computational basis.

The phase basis measurement is also known as the Pauli $X$ measurement as $|+\rangle$ and $|-\rangle$ are eigenstates of the Pauli gate $X$.

Although various technologies exist for implementing quantum computers, they all share the same shortcomings, namely that the qubits are affected by external noise and decoherence. Whereas bits in classical computers are materialized at the physical level by on/off states of transistor switches with high error margins, there is no such security for qubits. Indeed, the fragile superposition of states of a qubit may easily be disturbed by its environment and collapse, resulting in a loss of information. Quantum computers therefore fundamentally require error correction codes and fault tolerance at the physical level.

Quantum error correcting codes entangle several physical qubits, which act as a logical qubit. Entanglement between physical qubits is used to protect the logical information from error. More precisely, entanglement defines a correlation between physical qubits in terms of their Pauli operators, and an error happening on physical qubits changes the correlation. It is possible to detect this change in correlation by doing joint quantum measurements, in a way that the logical information is not collapsed. The classical information learned by doing this measurement is called a 'syndrome'. The extracted syndrome is given as an input to a classical decoder, which generates an estimate of the error that has happened.

There are different types of quantum error correcting codes such as stabilizer codes, Calderbank-Steane-Shor (CSS) codes, and triorthogonal quantum codes.

Hereafter, we use the following notations and definitions:

1. For $\boldsymbol{u} = (u_1, ..., u_N) \in \{0,1\}^N$, we define $X(\boldsymbol{u}) := X^{u_1} \otimes X^{u_2} \otimes \cdots \otimes X^{u_N}$, and similarly $Z(\underline{\boldsymbol{u}}) := Z^{u_1} \otimes Z^{u_2} \otimes \cdots \otimes Z^{u_N}$.

2. Moreover, $\mathrm{supp}(\boldsymbol{u}) := \{i = 1, ..., N \mid u_i = 1\}$ and $\mathrm{wt}(\boldsymbol{u}) := |\mathrm{supp}(\boldsymbol{u})|$.

3. Further, for $\boldsymbol{u}, \boldsymbol{v} \in \{0,1\}^N$, we define $\boldsymbol{u} \cdot v := \Sigma_i u_i v_i$.

A stabilizer code on $N$ physical qubits is defined using a subgroup $\mathcal{G}$ of the $N$ qubit Pauli group $\mathcal{G}_N$. The codespace corresponding to the stabilizer code is the subset of the $N$ qubit Hilbert space, stabilized by the subgroup $\mathcal{G}$. A Pauli operator $g \in \mathcal{G}_N$ stabilizes a quantum state $|\phi\rangle$, if it is an eigenstate of $g$ with the eigenvalue 1, that is:

$$g\,|\phi\rangle = \,|\phi\rangle \tag{15}$$

A subset $C$ of quantum states is said to be stabilized by a subgroup $\mathcal{G} \subset \mathcal{G}_N$ if every element $g \in \mathcal{G}$ stabilizes every quantum state $|\phi\rangle \in C$.

Note that for $C$ to be non-empty, it is sufficient to have $-I \notin \mathcal{G}$ and all the elements in $\mathcal{G}$ commute with each other, meaning that, for any two elements $g_1, g_2 \in \mathcal{G}$, we have:

$$[g_1, g_2] = 0 \qquad\qquad (16)$$

The subgroup $\mathcal{G}$ can be completely specified by a generating set $G = \{g_1, g_2, ..., g_N\}$. A generating set is independent if any $g_i \in G$ cannot be written as a product of elements from $\{g_1, g_2, ..., g_N\} \setminus \{g_i\}$. The size of an independent generating set determines the number of logical qubits encoded by the stabilizer code. Precisely, if the number of elements in an independent generating set is equal to $N - K$, then the stabilizer code encodes $K$ qubits. When $K = 0$, the code does not encode any quantum information, as it has only one fixed quantum state in its codespace, called a stabilizer state.

Stabilizer codes are suitable for detecting Pauli errors. Consider a code state $|\psi\rangle$, on which a random $N$-qubit Pauli error $E \in \mathcal{G}_N$ happens. Since any two elements of $\mathcal{G}_N$ either commute or anti-commute, then, for any $g_i \in G$, we have the following:

$$g_i E |\psi\rangle = (-1)^a \, E |\psi\rangle \qquad\qquad (17)$$

where $a = 0$ if $g_i$ commutes with $E$, and $a = 1$ if $g_i$ anti-commutes with E. Therefore, if $g_i$ anti-commutes with $E$, Eq. (17) implies that the error corrupted state $E|\psi\rangle$ is an eigenstate of $g_i$, with eigenvalue -1. This means that we can detect the error by doing the Pauli measurement corresponding to the generator $g_i$.

The syndrome measurement of stabilizer codes corresponds to measuring all the generators $g_1, g_2, ..., g_N$. Based on the extracted syndrome, an estimate $\hat{E}$ of $E$ is then generated using a classical decoder.

The CSS codes are an important subclass of stabilizer codes. A stabilizer code is a CSS code if there exists a generating set $G = G_x \cup G_z$ of the stabilizer group, such that any $g_x \in G_x$ can be written as a tensor product of $I$ and $X$, that is, $g_x = X^u := X^{u_1} \otimes X^{u_2} \otimes \cdots \otimes X^{u_N}$, for some $u = (u_1, u_2, \cdots, u_N) \in \{0,1\}^N$, and similarly any $g_z \in G_Z$ can be written as a tensor product of $I$ and Z, that is, $g_z = Z^v := Z^{v_1} \otimes Z^{v_2} \otimes ... \otimes Z^{v_N}$ for some $v = (v_1, v_2, \cdots, v_N) \in \{0,1\}^N$. Since, $g_x$ and $g_z$ must commute with each other, this imposes the following constraint on vectors $u$ and :

$$u \cdot v := \sum_i u_i v_i = 0 \pmod 2 \qquad\qquad (18)$$

The CSS code may be associated with two classical codes on $N$ bits, with parity check matrices $H_X$ and $H_Z$, where $H_X$ is a binary matrix whose rows are vectors $u \in \{0,1\}^N$ such that $X^u \in G_X$, and $H_Z$ is a binary matrix whose rows are vectors $v \in \{0,1\}^N$, such that $Z^v \in G_Z$. Then, Eq. (18) is equivalent to:

$$H_X H_Z^\mathsf{T} = 0 \pmod 2, \qquad\qquad (19)$$

where $H_Z^\mathsf{T}$ is the transpose of $H_Z$.

Let $\mathcal{H}_X, \mathcal{H}_Z \subseteq \{0,1\}^N$ be the spaces generated by the rows of matrices $H_X$, $H_Z$, respectively. Let $\mathcal{H}_Z^\perp$ be the space orthogonal to $\mathcal{H}_Z$. Then, from Eq. (19), we have $\mathcal{H}_X \subseteq \mathcal{H}_Z^\perp$.

Let $2^K, K \geq 0$ be the number of elements in the quotient group $\mathcal{H}_Z^\perp / \mathcal{H}_X$, and further let $\{h_i \mid i \in \{1, ..., K\}\}$ be a generator of $\mathcal{H}_Z^\perp / \mathcal{H}_X$. Then, the CSS code encodes $K$ qubits. By ignoring the normalization, the logical state $|\tilde{u}\rangle$ of the CSS code corresponding to a computational basis state $|u\rangle$, where $u = (u_1, ..., u_K) \in \{0,1\}^K$, can be expressed as follows:

$$|\widetilde{u}\rangle = \sum_{x \in \mathcal{H}_X} \left| \left( x \oplus \sum_{i=1}^{K} u_i h_i \right) \right\rangle \qquad (20)$$

Quantum polar codes are of CSS type that can be constructed on the basis of classical polar codes.

Fig. 3 represents the encoding of classical polar codes using reversible XOR gates.

The encoding of classical polar codes is done by applying the reversible XOR gate recursively on an $N$ bit input $u = (u_1, u_2, \cdots, u_N) \in \{0,1\}^N$, where $N = 2^n$, $n > 0$. For a set of positions $\mathcal{F} \subset \{1, ..., N-1\}$, the corresponding component $u_{\mathcal{F}} \in \{0,1\}^{|\mathcal{F}|}$ of the input vector $u$ is frozen (i.e. fixed). We may take $u_{\mathcal{F}}$ to be any vector in $\{0,1\}^{|\mathcal{F}|}$, but it should be known to both the encoder and decoder. The set $\mathcal{F}$ is called the 'frozen set'. The remaining positions $\mathcal{J} := \{1, ..., N-1\} \setminus \mathcal{F}$ are used to encode bits. The set $\mathcal{J}$ is called the 'information set'.

In the following, we denote by $P(N, \mathcal{F}, u_{\mathcal{F}})$, the classical polar code of codelength $N$, frozen positions $\mathcal{F}$, and frozen vector $u_{\mathcal{F}} \in \{0,1\}^{|\mathcal{F}|}$.

The example in Fig. 3 represents the encoding of a classical polar code of codelength $N = 2^3$ encoding 5 bits and where 3 bits are frozen. In this example, the frozen set is $\mathcal{F} = \{1,2,3\}$ and the frozen vector is $u_{\mathcal{F}} = (0,0,0)$.

The action of the reversible XOR gate $XOR_{2 \to 1}$ on u = $(u_1, u_2) \in \{0, 1\}^2$ gives $u' = (u_1 \otimes u_2, u_2)$. The vector $u'$ can be expressed as u' = $P_2 u$, where $P_2$ is the following matrix:

$$P_2 = \begin{bmatrix} 1 & 1 \\ 0 & 1 \end{bmatrix} \qquad (21)$$

Classical polar transform, that is, the recursive application of $XOR_{2 \to 1}$ on $N = 2^n$ qubits, is given by the matrix $P_N = P_2^{\otimes n}$. We note that the action of the opposite XOR, i.e., $XOR_{1 \to 2}$ is described by $P_2^{\mathsf{T}}$, i.e. the transpose of $P_2$. Hence, the recursive application of $XOR_{1 \to 2}$ is described by $P_N^{\mathsf{T}}$.

For any vector of information bits $u_{\mathcal{J}} \in \{0,1\}^{|u_{\mathcal{J}}|}$, $P_N(u_{\mathcal{F}}, u_{\mathcal{J}}) \in \{0,1\}^N$ is a codeword of the polar code $P(N, \mathcal{F}, u_{\mathcal{F}})$. Let $P_N^{(j)}$ be the jth column of $P_N$, for $j \in \{1, ..., N - 1\}$. Then, the classical polar code $P(N, \mathcal{F}, u_{\mathcal{F}})$ is generated by the columns $G = \{P_N^{(j)} \mid j \in \mathcal{J}\}$ of the polar transform $P_N$ corresponding to the set $\mathcal{J}$.

Classical polar codes have an efficient decoder known as 'successive cancellation' (SC) decoder. SC decoder takes as input the frozen vector $u_{\mathcal{F}}$, and a noisy version of the codeword $y \otimes e$, where $y = P_N(u_{\mathcal{F}}, u_{\mathcal{J}})$ is a codeword, and $e \in \{0, 1\}^N$ is a random error, and it outputs an estimate $\widehat{u}_{\mathcal{J}}$ of $u_{\mathcal{J}}$.

To construct a classical polar code, its frozen $\mathcal{F}$ and information $\mathcal{J}$ sets have to be determined. The frozen set $\mathcal{F}$ (equivalently, the information set $\mathcal{J}$) are determined in a channel specific way as follows. Given $N$ copies of a classical channel $W$, one first synthesizes a set of virtual channels $W^{(i)}$, $i \in \{1, ..., N\}$, based on a channel combining and splitting procedure. For sufficiently large $N$, the virtual channels are either very close to a noiseless channel or close to a noisy channel. This phenomenon is called channel polarization.

The set $\mathcal{F}$ (equivalently, $\mathcal{J}$) is selected based on this channel polarization phenomenon. The synthesized virtual channels are ordered from the best to worst in terms of their reliability, using either the Bhattacharyya parameter or the Log-likehood ratio (LLR).

Let $\mathcal{O}$ be the corresponding ordered set of indices, then, for a polar code of rate R, the least reliable indices, that is, the last 1 - RN elements of $\mathcal{O}$ are chosen to be in the frozen set $\mathcal{F}$. Equivalently, the first RN elements of $\mathcal{O}$ are chosen to be in the information set $\mathcal{J}$.

A triorthogonal quantum code is defined with respect to a corresponding triorthogonal matrix where any three of its rows are orthogonal.

More precisely, consider a binary matrix G of size $M \times N$. Let $G^{(i)} \in \{0,1\}^N$, $i \in \{1, ...,M\}$ be the ith row vector of G. Then, G is said to be triorthogonal if the following two conditions hold.

1)

$$\text{For } 1 \leq i < j \leq M, G^{(i)} \cdot G^{(j)} = 0 \ (\text{mod } 2) \tag{22}$$

2)

$$\text{For } 1 \leq i < j < k \leq M, G^{(i)} \cdot G^{(j)} \cdot G^{(k)} = 0 \ (\text{mod } 2). \tag{23}$$

Consider a triorthogonal matrix $G = \begin{bmatrix} G_1 \\ G_0 \end{bmatrix}$ of size $M \times N, M \leq N,$ such that $G_1$ and $G_0$ are not empty and each row in $G_1$ has odd weight and each row in $G_0$ has even weight. Let $\mathcal{G}$ be the space generated by the rows of G and let $\mathcal{G}^\perp$ be the space orthogonal to $\mathcal{G}$. Further, $G^\perp$ be a generator of $\mathcal{G}^\perp$, hence we have $G^\perp G^T = 0 \ (\text{mod } 2)$.

Then, a triorthogonal quantum code corresponding to a given triorthogonal matrix G is a CSS code, defined by the following $X$ and $Z$ type generators:

$$\mathbb{G}_X = \left\{ X\left(G_0^{(i)}\right) \,\middle|\, i \in \{1, ..., M - K\}\right\} \tag{24}$$

$$\mathbb{G}_Z = \left\{ Z\left(G^{\perp(i)}\right) \,\middle|\, i \in \{1, ..., N - M\}\right\} \tag{25}$$

where $K$ is the number of rows in $G_1$. The triorthogonal code encodes $K$ logical qubits into $N$ physical qubits.

It should be noted that in order to process the logical quantum information encoded in a logical quantum state of a given code, a logical gate has to be applied on it.

In particular, consider a quantum gate U that acts on the uncoded quantum states. Let $|\tilde{\phi}\rangle$ be the logical state corresponding to the uncoded quantum state $|\phi\rangle$. Let $\tilde{U}$ be the logical version of the quantum gate $U$. Then, $\tilde{U}$ acts on $|\tilde{\phi}\rangle$, as follows:

$$\tilde{U}|\tilde{\phi}\rangle = \left|\widetilde{U\phi}\right\rangle \tag{26}$$

where $\left|\widetilde{U\phi}\right\rangle$ denotes the logical state corresponding to $U|\phi\rangle$.

However, to be usable in a noisy scenario, a fault tolerant procedure for a logical gate $\tilde{U}$ is needed, so that an error do not propagate to multiple qubits during its implementation.

A simple example of a fault tolerant logical gate is the transversal logical gate which is configured to apply individually a quantum gate on each qubit of the code state $|\tilde{\phi}\rangle$ preventing thus, an error on one qubit to propagate to other qubits.

The T gate is often considered for universal quantum computing. It is an important ingredient for fault tolerant quantum computing and therefore, it is very interesting to implement the logical T gate in a transversal manner.

It has been shown by Bravyi and Haah, Phys. Rev. A, 86, 5 (2012), arxiv:1209.2426, that for triorthogonal codes, the logical T gate is transversal up to a Clifford unitary, as follows:

$$\otimes_{i=1}^{K} \tilde{T}_i = U\left(\otimes_{i=1}^{N} T_i\right) \qquad (27)$$

where $U$ is a Clifford unitary containing controlled Z and S gates. Due to this property, triorthogonal codes have been used in the prior art for the magic state distillation.

However, the controlled $Z$ gate belonging to the Clifford unitary is a two qubit gate that can propagate an error on one of the qubits to the other qubit. Practically, this implies that the logical $T$ gate as defined in Eq. (27) is not fault tolerant for triorthogonal quantum codes. An error caused by a noise on a qubit may propagate to other qubits. Therefore, the implementation of the logical $T$ gate on triorthogonal codes, according to the prior art cannot be efficiently used for fault tolerant quantum computations.

An object of the present invention is to remedy the aforementioned drawbacks by proposing a quantum processing system that implements a logical T gate in a transverse mode which can thus be efficiently used for fault tolerant quantum computations. Another object is to propose a method for efficiently constructing a quantum code whose properties ensure the implementation of a transverse logical T gate.

## BRIEF DESCRIPTION OF THE INVENTION

The present invention concerns a method of constructing a triply even quantum code, comprising the following steps:

- construct a matrix $G'$ of size $M' \times N'$ satisfying triply-even properties, said matrix $G'$ is said to be a triply even matrix $G'$,
- construct out of said triply even matrix $G'$, a triorthogonal matrix $G$ of size $M \times N$ comprising a non-empty set of $K$ rows with odd weights where $M = M'$, and $N = N' - K$, for $0 \leq K \leq M'$,
- define a triorthogonal quantum code associated with the triorthogonal matrix $G$ that encodes K logical qubits into N physical qubits, said triorthogonal quantum code is said to be a triply even quantum code associated with the triply even matrix $G'$.

This code can be used in a noisy scenario such that an error do not propagate to multiple qubits during its implementation and is thus, very useful for fault tolerant quantum computation.

Advantageously, the triply even matrix $G'$ is a submatrix of a polar transform matrix $P_{N'}$ wherein, at least one column is punctured from said triply even matrix $G'$ such that the triply even quantum code is a triply even quantum polar code.

Advantageously, the construction of the triply even matrix $G'$ comprises the following steps:

- order a set of rows corresponding to synthesized virtual channels according to their polarization property from the best to the worst channel,

- select a subset of $N'$ rows of the polar transform $P_{N'}^{\mathsf{T}}$, starting from the row corresponding to the best virtual channel to the worst virtual channel, such that each new row is selected only if it does not violate the triply-even properties when added to the set of the previously selected rows.

Advantageously, the method comprises a step of applying a transversal logical $T$ gate on the qubits of a triply even quantum code or a triply even quantum polar code enabling to process the logical quantum information encoded in the triply even quantum code or the triply even quantum polar code.

This transversal logical $T$ gate implementation is significantly simpler and less resource intensive than the state of the art method based on the magic state distillation, while enabling efficient fault tolerant quantum computing.

The present invention also concerns a quantum processing system configured to implement a transversal action of a logical T gate on a triply even quantum code encoding K logical qubits into N physical qubits wherein, the logical T gate is a tensor product of K elementary logical gates acting on the corresponding K logical qubits. the triply even quantum code is advantageously constructed according to the above method.

Advantageously, the action of the logical $T$ gate is identical to the action of a tensor product of $N$ products of elementary physical $T_i$ and $S_i$ gates such that the logical $T$ gate is equivalent to first applying a transversal physical $T$ gate and then a transversal physical S gate.

Advantageously, the triply even quantum code is a triply even quantum polar code constructed according to the above method.

Advantageously, the quantum processing system is configured to implement a set of quantum logical gates composed of the logical CNOT gate, logical $H$ gate, and the logical T gate.

The present invention also concerns a computing system comprising a classical processing system, a classical-quantum interface, and a quantum processing system according to the above features.

Advantageously, the classical processing system comprises a syndrome extractor and a classical decoder, the syndrome extractor being configured to extract a syndrome out of quantum measurements implemented by the quantum processing system, and the classical decoder being configured to decode the triply even quantum code or the triply even quantum polar code by implementing successive cancellation decoding.

**BRIEF DESCRIPTION OF THE DRAWINGS**

The present invention will be better understood from the description of the following embodiments, by way of illustration and in no way limitative thereto:

Fig. 1, already described, represents a Controlled-NOT gate the $\text{CNOT}_{2\to1}$ known from the prior art;
Figs. 2A and 2B, already described, represent quantum measurement circuits on a qubit in computational and phases bases, known from the prior art;
Fig. 3, already described, represents the encoding of classical polar codes using reversible XOR gates, known from the prior art;
Fig. 4 schematically represents a method of constructing a triply even quantum code, according to an embodiment of the present invention;
Fig. 5 schematically represents a quantum processing system, according to an embodiment of the present invention;
Fig. 6 schematically represents a method of constructing a triply even quantum polar code, according to a preferred embodiment of the present invention;
Figs. 7A and 7B, schematically represent a numerical simulation related to the triply even quantum polar codes constructed according to the method of Fig. 6; and
Fig. 8 schematically represents a computing system, according to a preferred embodiment of the present invention.

**DETAILED DISCLOSURE OF PARTICULAR EMBODIMENTS**

The concept of the present invention is to determine the properties of a quantum code on which a logical T gate can be implemented in a transverse manner.

In particular, the present invention proposes to use a logical T gate on a subclass of triorthogonal quantum codes, namely triply even quantum codes, in a transverse way.

A triply even quantum code is associated to a corresponding triply even matrix. In general, a matrix G is said to be triply even if for any three of its rows $G^{(i)}, G^{(j)}, G^{(k)}$, we have the following properties:

$$\text{wt}\left(G^{(i)}\right) = 0 \ (\text{mod } 8) \tag{28}$$

$$G^{(i)} \cdot G^{(j)} = 0 \ (\text{mod } 4) \tag{29}$$

$$G^{(i)} \cdot G^{(j)} \cdot G^{(k)} = 0 \ (\text{mod } 2) \tag{30}$$

The triply even matrices are a subset of triorthogonal matrices, satisfying a stronger condition than in Eq. (22), that is, $G^{(i)} \cdot G^{(j)} = 0 \ (\text{mod } 4)$. From Eq. (28), the number of rows with odd weights in a triply even matrix is equal to zero.

The rows of a triply even matrix G generate a triply even space $\mathcal{G}$, that is, for any $u \in \mathcal{G}$, we have wt($u$) = 0 (mod 8). In other words, the weight of every element in $\mathcal{G}$ is divisible by 8. A triply even matrix cannot therefore be directly used to construct a triorthogonal quantum code.

However, there exists a known technique called puncturing procedure, described in Krishna and Tillich, arXiv: 1811.03112, which allows removing some columns from a triorthogonal matrix G' to yield a new triorthogonal matrix G.

For example, consider a triply even matrix G' of size $M' \times N'$. By deleting K linearly independent columns, a triorthogonal matrix G of size $M \times N$, where $M = M'$, and $N = N' - K$, for $0 \le K \le M'$ may be obtained. The columns in G' that need to be deleted may be permuted so that they become the first K columns. Then, by doing Gaussian elimination on G', a matrix G'' in the reduced row echelon form is obtained, as follows:

$$G'' = \begin{bmatrix} I_K & G_1 \\ 0 & G_0 \end{bmatrix} \qquad\qquad (31)$$

where $I_K$ is the identity matrix of size $K \times K$. The first $K$ columns of $G''$ can now be deleted to get the triorthogonal matrix G of size $M \times N$, as follows:

$$G = \begin{bmatrix} G_1 \\ G_0 \end{bmatrix} \qquad\qquad (32)$$

The matrix $G$, obtained after deleting $K$ columns from $G'$ in the above manner, has the first $K$ rows with odd weights. This puncturing procedure is useful to construct a triorthogonal matrix $G$ having rows with odd weights and thus, to construct a triorthogonal quantum code out of an original triorthogonal matrix $G'$ having only rows with even weights.

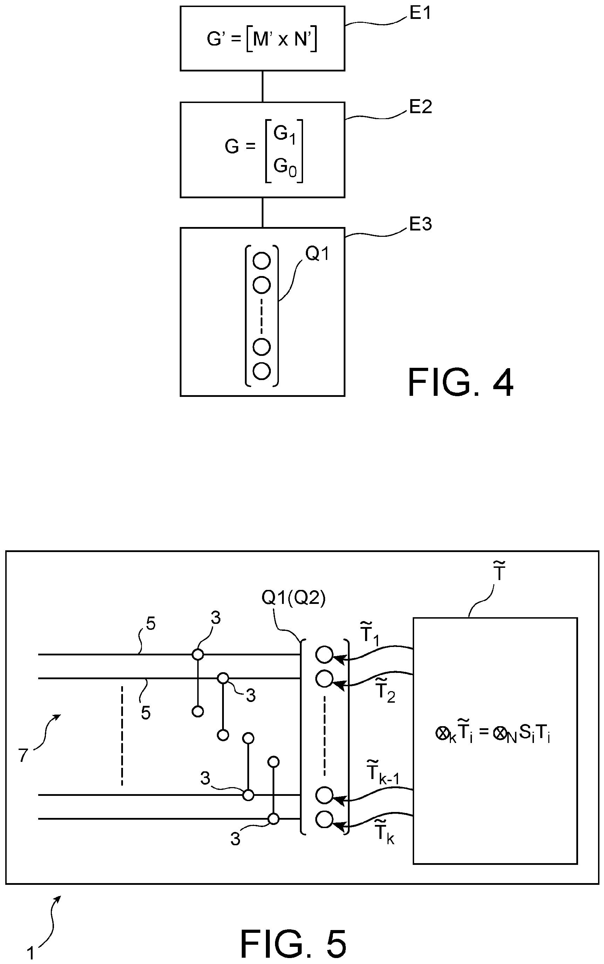

Fig. 4 schematically represents a method of constructing a triply even quantum code according to an embodiment of the present invention.

Step E1 concerns the construction of a triply even matrix $G'$ of size $M' \times N'$ satisfying the triply-even conditions defined in Eqs. (28), (29) and (30).

Step E2 concerns the construction of a triorthogonal matrix $G$ out of the triply even matrix $G'$. In fact, since any triply even matrix is triorthogonal, the puncturing method described above may be used to obtain a new triorthogonal matrix of the from $G = \begin{bmatrix} G_1 \\ G_0 \end{bmatrix}$ from $G'$, such that in $G_1$, the set of rows with odd weights, is non-empty. Therefore, the constructed triorthogonal matrix G is of size $M \times N$ comprising a non-empty set of K rows with odd weights where $M = M'$, and $N = N' - K$, for $0 \leq K \leq M'$.

At step E3, the triorthogonal quantum code associated with the triorthogonal matrix G which encodes K logical qubits into N physical qubits, is defined as a triply even quantum code Q1 associated with the triply even matrix $G'$.

Hence, triply even quantum codes Q1 are a subclass of triorthogonal quantum codes, that are constructed by combining triply even matrices and triorthogonal quantum codes.

As set out by the present invention, the triply even codes Q1 constructed according to the above steps are advantageous in the sense that they enable the logical $T$ gate to be implemented fault tolerantly and therefore, to be used for fault tolerant quantum computing.

Fig. 5 schematically represents a quantum processing system according to an embodiment of the present invention.

The quantum processing system 1 comprises different types of quantum gates 3 (for example, CNOT gates, H gates, and T gates) that are interconnected by wires 5 to form quantum circuits 7. The quantum circuits are configured to implement different kinds of quantum codes and logical quantum gates. The wires 5 carry qubits around the circuits 7, while the quantum gates 3 execute some operations on the qubits to make quantum computations.

Various technologies exist for materializing or implementing qubits, quantum gates, and quantum circuits. One technology is based on the energy levels of ions trapped in an electric or magnetic field at a temperature near absolute zero using also laser pulses, optical pumping, etc. Another technology may use nuclear magnetic resonance where transformations may be constructed from magnetic field pulses applied to spins in a strong magnetic field, etc. Other technologies use physical systems based on small semiconductors called quantum dots bounding the spin of electrons. Other systems may take advantage of electrons or ions trapped in synthetic diamonds.

Different examples of physical systems materializing qubits, quantum gates and quantum circuits can be found in the reference book entitled "Quantum computation and quantum information" authored by M.A. Nielsen and I.L. Chuang, Cambridge University Press, 2016.

According to an embodiment of the present invention, the quantum processing system 1 is configured to implement the method described in relation to Fig. 4 and to implement a transversal logical T gate (noted $\tilde{T}$) on the triply even quantum code Q1 encoding K logical qubits into N physical qubits. The triply even quantum code Q1 is defined using a triorthogonal matrix $G = \begin{bmatrix} G_1 \\ G_0 \end{bmatrix}$ of size $M \times N$, which is obtained from a triply even matrix $G' = \begin{bmatrix} I_K & G_1 \\ 0 & G_0 \end{bmatrix}$ of size $M' \times N'$.

The present invention reveals that the triply even quantum code Q1 has a transversal logical $T$ gate (i.e., $\tilde{T}$) according to the following property:

$$\tilde{T} = \otimes_{i=1}^{K} \tilde{T}_i = \left( \otimes_{i=1}^{N} S_i T_i \right) \tag{33}$$

The left hand side of Eq. (33) defines the logical gate $\tilde{T}$ as a tensor product of K elementary logical gates $\tilde{T}_i$ configured to act on the corresponding K logical qubits of the triply even quantum code Q1. The right hand side of Eq. (33) defines the action of a tensor product of N products of elementary physical $T_i$ and $S_i$ gates on the corresponding N physical qubits thus, guarantying the transversal property of the logical gate $\tilde{T}$.

Eq. (33) implies that the Clifford unitary U in Eq. (27) does not contain any controlled Z gate knowing that $U = \otimes_{i=1}^{N} S_i$. Hence, the logical T gate (i.e. $\tilde{T} = \otimes_{i=1}^{K} \tilde{T}_i$ ) is equivalent to first applying the transversal physical T gate and then the transversal physical S gate, meaning that the implementation of the logical gate $\otimes_{i=1}^{K} \tilde{T}_i$ is fault tolerant for triply even quantum codes.

To prove the validity of Eq. (33) for triply even quantum codes, recall first that the X and Z type generators of the triply even code is as follows:

$$\mathbb{G}_X = \left\{ X\left( G_0^{(i)} \right) \,\middle|\, i \in \{1, \dots, M - K\} \right\} \tag{34}$$

$$\mathbb{G}_Z = \left\{ Z\left( G^{\perp(i)} \right) \,\middle|\, i \in \{1, \dots, N - M\} \right\} \tag{35}$$

where K is the number of rows in the matrix $G_1$. Further, the triply even code encodes K qubits into $N = N' - K$ qubits. Let $\mathcal{G}_0$ be the space generated by the rows of the matrix $G_0$. Then, using equation (20), the logical state $|\tilde{u}\rangle$ corresponding to a computational basis state $|u\rangle, u \in \{0,1\}^K$ is defined, as follows:

$$|\tilde{u}\rangle = \sum_{x \in \mathcal{G}_0} \left| \left( x + \sum_{i=1}^{k} u_i G_1^{(i)} \right) \right\rangle, \forall u \in \{0,1\}^K. \tag{36}$$

On the other hand, the relation between G' and G can be expressed as follows:

$$G'^{(i)} = \left( I_K^{(i)}, G_1^{(i)} \right) \in \{0,1\}^{N'}, 1 \le i \le K, \tag{37}$$

$$G'^{(i)} = \left( 0, G_0^{(i)} \right) \in \{0,1\}^{N'}, K + 1 \le i \le N \tag{38}$$

From Eq. (37), it follows that $\sum_{i=1}^{k} u_i \left( I_k^{(i)}, G_1^{(i)} \right) \in \{0,1\}^{N'}$ belongs to the triply even space $\mathcal{G}'$, generated by the rows of G'. Further, as $x \in \mathcal{G}_0$, from Eq. (38), it follows that $(0, x) \in \{0,1\}^{N'}$ also belongs to the triply even space $\mathcal{G}'$. Therefore, $\mathrm{wt}\left( (0, x) + \sum_{i=1}^{K} u_i \left( I_K^{(i)}, G_1^{(i)} \right) \right) = 0 \ (\mathrm{mod} \ 8)$, which implies the following:

$$\mathrm{wt}\left( x + \sum_{i=1}^{k} u_i G_1^{(i)} \right) = -\mathrm{wt}(u) \ (\mathrm{mod} \ 8) \tag{39}$$

Let $T^\dagger$ be the transpose of the complex conjugate of T. Then, from Eqs. (36) and (39), we have the following:

$$\otimes_N T^\dagger |\widetilde{\boldsymbol{u}}\rangle = e^{\frac{i\pi \mathrm{wt}(u)}{4}} |\widetilde{\boldsymbol{u}}\rangle = \otimes_{i=1}^K \widetilde{T}_i |\widetilde{\boldsymbol{u}}\rangle \tag{40}$$

Introducing $T^\dagger = ST$, into Eq. (40), we directly obtain the above Eq. (33) which states that the logical T gate is transverse for a triply-even quantum code Q1 and is thus, fault tolerant.

Quantum polar codes of CSS type can be constructed on the basis of classical polar codes. The encoding of CSS quantum polar codes is done by applying the quantum CNOT gate recursively on an $N'$ qubit quantum state

$$|\phi\rangle_{\mathcal{S}},$$

where

$$\mathcal{S} := \{1, \dots, N'\}, N' = 2^n, n > 0.$$

In general, for a subset of positions

$$\mathcal{Z} \subset \mathcal{S},$$

the input quantum state is frozen to a computational basis quantum state $|\boldsymbol{u}\rangle_{\mathcal{Z}}$, where $\boldsymbol{u} \in \{0,1\}^{|\mathcal{Z}|}$, and for another subset

$$\mathcal{X} \subset \mathcal{S},$$

it is frozen to a phase basis state $|\overline{\boldsymbol{v}}\rangle_{\mathcal{X}}$, where $\boldsymbol{v} \in \{0,1\}^{|\mathcal{X}|}$. For $\boldsymbol{u}$ and $v$, we may take any vectors in $\{0,1\}^{|\mathcal{Z}|}$ and $\{0,1\}^{|\mathcal{X}|}$, respectively, but they should be known to both the encoder and decoder.

The remaining subset

$$\mathcal{D} := \mathcal{S} \setminus (\mathcal{X} \cup \mathcal{Z})$$

is used to encode an arbitrary quantum state $|\psi\rangle_{\mathcal{D}}$ that we want to encode. Hence, the uncoded quantum state

$$|\phi\rangle_{\mathcal{S}}$$

can be written as:

$$|\phi\rangle_{\mathcal{S}} = |\psi\rangle_{\mathcal{D}} \otimes |\boldsymbol{u}\rangle_{\mathcal{Z}} \otimes |\overline{\boldsymbol{v}}\rangle_{\mathcal{X}}$$

Then, the encoded quantum state is given by

$$Q_{N'}|\phi\rangle_S,$$

where $Q_{N'}$ denotes the quantum polar transform on $N'$ qubits, that is, the quantum operator on $N'$ qubits defined by the recursive application of the CNOT gate.

It is known that $CNOT_{2\to1}$ acts as the reversible XOR gate $XOR_{2\to1}$ in the computational basis, while it acts as $XOR_{1\to2}$ in the phase basis. Hence, the quantum polar transform $Q_{N'}$ acts as classical polar transform in the computational basis, while it acts as the opposite polar transform in the phase basis. The polar transform and the opposite polar transform are described by the matrices $P_{N'}$ and $P_{N'}^{\mathsf{T}}$, respectively. Hence, for computational and phase basis states corresponding to $\boldsymbol{u} \in \{0,1\}^N$, the encoded quantum state

$$Q_{N'}|\boldsymbol{u}\rangle_S$$

can be expressed as:

$$Q_{N'}|\boldsymbol{u}\rangle_S = |P_{N'}\boldsymbol{u}\rangle_S \tag{42}$$

$$Q_{N'}|\overline{\boldsymbol{u}}\rangle_S = \left|\overline{P_{N'}^{\mathsf{T}}u}\right\rangle_S \tag{43}$$

A triply even quantum polar code is a triply even quantum code, where the associated triply even matrix $G'$ of size $M' \times N'$ is a submatrix of the polar transform matrix $P_{N'}$, and where one or more columns are punctured from $G'$.

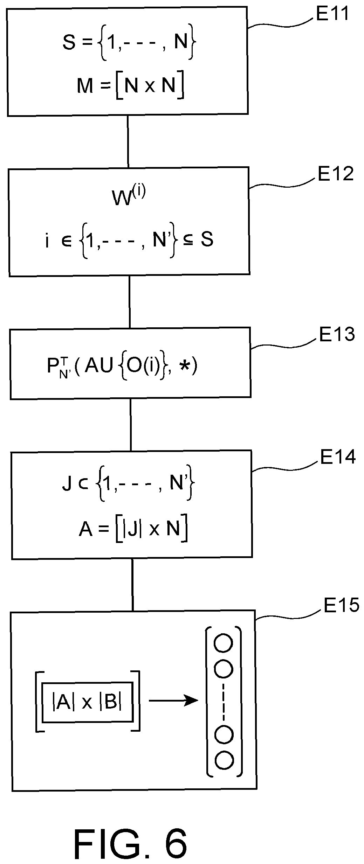

Fig. 6 schematically represents a method of constructing a triply even quantum polar code according to a preferred embodiment of the present invention.

The method of construction is implemented by the quantum processing system 1 described in relation to Fig. 5.

At step E11, we have an initial set of indices

$$\mathcal{S} := \{1, \dots, N'\},$$

associated to a binary matrix $P_{N'}^{\mathsf{T}}$ of size $N' \times N'$.

At step E12, $N'$ instances of synthesized virtual channels

$$W^{(i)}, i \in \mathcal{S} = \{1, \dots, N'\}$$

are obtained by applying the channel combining and splitting procedure on a given classical channel $W$. The synthesized virtual channels $W^{(i)}$, $i \in \{1, ..., N\}$ are then ordered according to their polarization property from best to worst channel. The set of the synthesized virtual channels (also called rows) are ordered according to their polarization property from best to worst channel (or row). Let $\mathcal{O}$ represent the corresponding ordered set of indices. The ith element of $\mathcal{O}$ is denoted by $\mathcal{O}(i)$.

Steps E13- E14 concern the selection of a subset of rows

$$\mathcal{J} \subseteq \mathcal{S} = \{1, \dots, N'\}$$

of the original polar transform matrix $P_{N'}^{\mathsf{T}}$ according to the ordered set O(i).. Each new row is selected only if, when added to the set of the previously selected rows, it does not violate the triply-even properties defined in Eqs. (28)-(30).

In particular, at step E13, the elements in $\mathcal{O}$ are read sequentially from the beginning to the end, and a row of $P_{N'}^{\mathsf{T}}$ corresponding to an element $\mathcal{O}(i)$ is selected if the resultant matrix is triply even and rejected if it is not. More precisely, after the (*i* - 1)th element $\mathcal{O}(i-1)$ has been read, let

$$\mathcal{A} \subseteq \mathcal{O} \mid$$

be the set such that the corresponding rows of $P_{N'}$ are selected.
Let

$$P_{N'}^{\mathsf{T}}(\mathcal{C},\mathcal{D})$$

be the matrix obtained by selecting the rows and columns from the polar transform $P_{N'}^{\mathsf{T}}$ corresponding to the subset

$$\mathcal{C},\mathcal{D} \subseteq \mathcal{S}.$$

Hence,

$$P_{N'}^{\mathsf{T}}(\mathcal{A},\mathcal{S})$$

is the triply even matrix corresponding to the rows of $P_{N'}^{\mathsf{T}}$ in the set $\mathcal{A}$. Then, the $\mathcal{O}(i)$th row of $P_{N'}^{\mathsf{T}}$, is selected if and only if the matrix

$$P_{N'}^{\mathsf{T}}(\mathcal{A} \cup \{\mathcal{O}(i)\},\mathcal{S})$$

is a triply even matrix, that is, the rows of

$$P_{N'}^{\mathsf{T}}(\mathcal{A} \cup \{\mathcal{O}(i)\},\mathcal{S})$$

satisfy the triply-even properties defined in Eqs. (28)-(30).
In particular, at the beginning, when the first row is selected, the first condition only, i.e. Eq. (28) has to be checked. When the second row is selected, only the first two conditions Eqs. (28) and (29) have to be checked. Afterwards, all the three conditions i.e., Eqs. (28)-(30) have to be checked.

At step E14, the remaining set $\mathcal{A}$ at the end after $\mathcal{O}(N')$, corresponds to the desired set $\mathcal{J}$ defining the triply even matrix

$$P_{N'}^{\mathsf{T}}(\mathcal{J}, \mathcal{S})$$

of size $|\mathcal{I}| \times N$.

At step E15, the puncturing procedure is used on

$$P_{N'}^{\mathsf{T}}(\mathcal{I},\ \mathcal{S})$$

to obtain a triorthogonal matrix $P_{N'}^{\mathsf{T}}(\mathcal{I}, B)$ of size $|\mathcal{I}| \times |\mathcal{B}|$ where

$$\mathcal{B} \subseteq \mathcal{S},$$

which is used to construct a triply even quantum polar code Q2 encoding $K$ qubits from the triply even matrix

$$P_{N'}^{\mathsf{T}}(\mathcal{I},\ \mathcal{S}),$$

as described before.

According to an embodiment of the present invention, the quantum processing system 1 depicted in Fig. 5 is configured to implement a transversal action of a logical T gate on the triply even quantum polar code Q2 constructed according to the method of Fig.6.

Advantageously, the quantum processing system 1 is configured to implement a universal set of quantum logical gates composed of the CNOT, Hadamard, and T logical gates on triply even quantum codes Q1 or triply even quantum polar codes Q2. The present invention is mainly concerned with the implementation of T gates. However, the implementation of the CNOT logical gate is also transversal while the implementation of the Hadmard gate can also be done in a fault tolerant way, using a known method by Paetznick and Reichardt, Phys. Rev. Lett, 111, 9 (2013), arxiv:1304.3709.

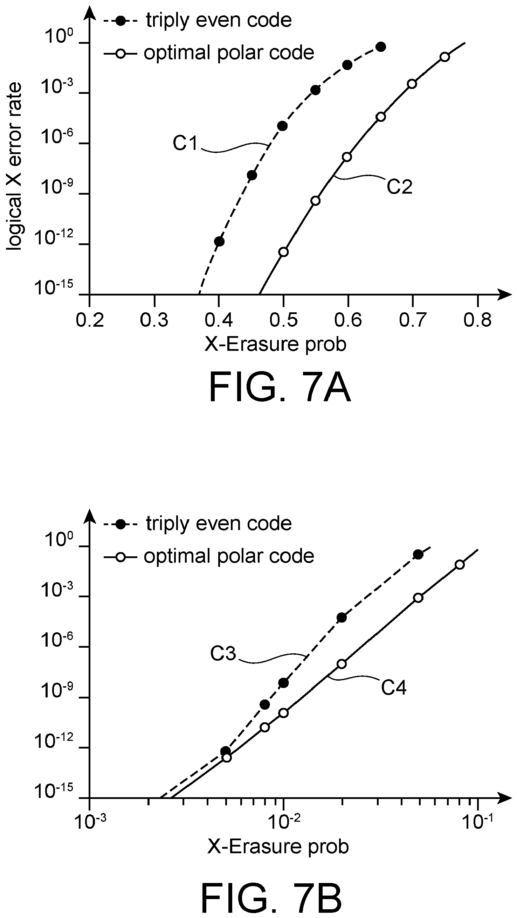

Figs. 7A and 7B, schematically represent a numerical simulation related to the triply even quantum polar codes constructed according to the method of Fig. 6.

In this simulation, $N'$ is taken to be $2^{10}$ and a classical erasure channel $W$ with erasure probability $e = 0.2$ is considered to obtain the triply even matrix

$$P_{N'}^{\mathsf{T}}(\mathcal{I},\ \mathcal{S}),$$

based on the method of Fig.6.

In particular, the simulation considers triply even codes encoding only one qubit, hence only one column is deleted from

$$P_{N'}^{\mathsf{T}}(\mathcal{I},\ \mathcal{S}).$$

For example, the last $N'$th column is deleted from

$$P_{N'}^{\mathsf{T}}(\mathcal{I},\ \mathcal{S}),$$

thus, obtaining

$$P_{N'}^{\mathsf{T}}(\mathcal{I}, \ \mathcal{S} \setminus \{N'\})$$

after the deletion. For the SC decoding, the deleted position is treated as an erasure.

The simulation considers a quantum erasure channel, which is associated with two classical erasure channels corresponding to *X* and *Z* erasures, respectively. The logical *X* and *Z* error rates of the triply even code, under SC decoding, of both triply even and optimal polar code of the same rate, are given in Figs. 7A and 7B, respectively.

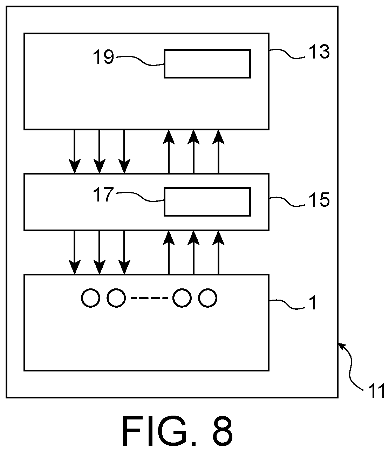

In Fig. 7A, the curve C1 (dotted line) represents the logical *X* error rate of the triply even code with respect to the *X* erasure probabilty. The curve C2 (continuous line) represents the logical *X* error rate of the optimal polar code of the same rate, constructed using the polarization based procedure. Similarly, in Figure 8B, the logical *Z* error rate C3 (dotted line) of the triply even code is compared with the logical *Z* error rate C4 (continuous line) of the optimal polar code. A minor performance degradation for both *X* and *Z* logical error rates of the triply even codes is apparent when compared to the polarization based construction. This performance degradation is acceptable for practical applications. For example, consider the logical error rate $10^{-15}$. For triply even codes, the *X* erasure probability is between 0.3 and 0.4, while for optimal polar codes it is between 0.4 and 0.5. Further, the Z erasure probability is between $10^{-3}$ and $10^{-2}$ for both triply even and optimal polar codes.

Finally, it is noted from Figures 7A and 7B that the triply even code has an asymmetric error capacity in the sense that it can correct more *X* errors than *Z* errors. For example, for the logical error rate $10^{-15}$, the *X* erasure probability is between 0.3 and 0.4, while the *Z* error probability is between $10^{-3}$ and $10^{-2}$. Note that a triply even code that corrects more *Z* errors than *X* errors can be constructed by a simple change of basis.

Fig. 8 schematically represents a computing system according to a preferred embodiment of the present invention.

The computing system 11 comprises a quantum processing system 1, a classical processing system 13 and a classical-quantum interface 15. The quantum processing system 1 is coupled to the classical processing system 13 via the classical-quantum interface 15.

The quantum processing system 1 is configured to implement a transversal action of a logical T gate on a triply even quantum code or a triply even quantum polar code, as described above.

The classical-quantum interface 15 comprises a syndrome extractor 17 configured to extract a syndrome out of quantum measurements implemented by the quantum processing system 1.

The classical processing system 13 comprises a classical decoder 19 configured to decode the triply even quantum code or the triply even quantum polar code constructed according to the above methods by implementing successive cancelation decoding.

**Claims**

1. Method of constructing a triply even quantum code, comprising the following steps:

   - construct a matrix *G'* of size *M' × N'* satisfying triply-even properties, said matrix *G'* is said to be a triply even matrix *G'*,
   - construct out of said triply even matrix *G'*, a triorthogonal matrix G of size *M × N* comprising a non-empty set of K rows with odd weights where *M = M'*, and *N = N' - K*, for $0 \leq K \leq M'$,
   - define a triorthogonal quantum code associated with the triorthogonal matrix G that encodes K logical qubits into N physical qubits, said triorthogonal quantum code is said to be a triply even quantum code associated with the triply even matrix *G'*.

2. Method according to claim 1, **characterized in that** the triply even matrix *G'* is a submatrix of a polar transform matrix $P_{N'}$ $P_N$, and wherein, at least one column is punctured from said triply even matrix *G'* such that the triply even quantum code is a triply even quantum polar code.

3. Method according to claim 1 or 2, **characterized in that** the construction of the triply even matrix *G'* comprises the following steps:

   - order a set of rows corresponding to synthesized virtual channels according to their polarization property from the best to the worst channel,

- select a subset of $N'$ rows of the polar transform $P_{N'}^{\mathsf{T}}$, starting from the row corresponding to the best virtual channel to the worst virtual channel, such that each new row is selected only if it does not violate the triply-even properties when added to the set of the previously selected rows.

4. Method according to anyone of the preceding claims, **characterized in that** it comprises a step of applying a transversal logical $T$ gate on the qubits of a triply even quantum code or a triply even quantum polar code enabling to process the logical quantum information encoded in the triply even quantum code or the triply even quantum polar code.

5. Quantum processing system (1), **characterised in that** it is configured to implement a transversal action of a logical $T$ gate on a triply even quantum code (Q1) encoding $K$ logical qubits into $N$ physical qubits wherein, the logical $T$ gate is a tensor product of $K$ elementary logical gates $T_i$ acting on the corresponding $K$ logical qubits.

6. Quantum processing system (1) according to claim 5, **characterised in that** the action of the logical $T$ gate is identical to the action of a tensor product of $N$ products of elementary physical $T_i$ and $S_i$ gates such that the logical $T$ gate is equivalent to first applying a transversal physical $T$ gate and then a transversal physical S gate.

7. Quantum processing system according to claim 5 or 6, **characterised in that** said triply even quantum code (Q1) is constructed according to the method of claim 1.

8. Quantum processing system according to claim 5 or 6, **characterised in that** said triply even quantum code is a triply even quantum polar code (Q2) constructed according to the method of claim 2 or 3.

9. Quantum processing system according to anyone of claim 5 to 8, **characterised in that** it is configured to implement a set of quantum logical gates composed of the logical CNOT gate, logical $H$ gate, and the logical T gate.

10. Computing system comprising a classical processing system (13), a classical-quantum interface (15), and a quantum processing system (1) according to anyone of claims 5 to 9.

11. Computing system according to claim 10, **characterised in that** the classical processing system (13) comprises a syndrome extractor (17) and a classical decoder (19), the syndrome extractor (17) being configured to extract a syndrome out of quantum measurements implemented by the quantum processing system, and the classical decoder (19) being configured to decode the triply even quantum code or the triply even quantum polar code by implementing successive cancellation decoding.

FIG. 1

FIG. 2A

FIG. 2B

FIG. 3

FIG. 4

FIG. 5

E11

$$S = \left\{ 1, --- , N \right\}$$
$$M = \left[ N \times N \right]$$

E12

$$W^{(i)}$$
$$i \in \left\{ 1, --- , N' \right\} \subseteq S$$

E13

$$P_{N'}^{T} \left( A \cup \left\{ O(i) \right\}, \ast \right)$$

E14

$$J \subset \left\{ 1, --- , N' \right\}$$
$$A = \left[ |J| \times N \right]$$

E15

$$\left[ |A| \times |B| \right] \rightarrow$$

# FIG. 6

FIG. 7A

FIG. 7B

FIG. 8

# EUROPEAN SEARCH REPORT

Europäisches
Patentamt
European
Patent Office
Office européen
des brevets

**Application Number**

EP 22 30 6813

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | ANIRUDH KRISHNA ET AL: "Magic state distillation with punctured polar codes", ARXIV.ORG, CORNELL UNIVERSITY LIBRARY, 201 OLIN LIBRARY CORNELL UNIVERSITY ITHACA, NY 14853, 7 November 2018 (2018-11-07), XP081047453, * paragraph [0003] – paragraph [0004] * ----- | 1-11 | INV. G06N10/70 G06N10/20 |
| A | JEONGWAN HAAH: "Towers of generalized divisible quantum codes", ARXIV.ORG, CORNELL UNIVERSITY LIBRARY, 201 OLIN LIBRARY CORNELL UNIVERSITY ITHACA, NY 14853, 25 September 2017 (2017-09-25), XP080823399, * page 19 * ----- | 2,3,8 | |

**TECHNICAL FIELDS SEARCHED (IPC)**

G06N

The present search report has been drawn up for all claims

| Place of search | Date of completion of the search | Examiner |
|---|---|---|
| The Hague | 4 April 2023 | Falco, Gabriele |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
................................................................
& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **BRAVYI ; HAAH.** *Phys. Rev. A,* 2012, vol. 86, 5

- **PAETZNICK ; REICHARDT.** *Phys. Rev. Lett,* 2013, vol. 111, 9